# EUROPÄISCHE PATENTSCHRIFT

(11) **EP 1 503 226 B1**
(45) Veröffentlichungstag und Bekanntmachung des Hinweises auf die Patenterteilung: **13.02.2013**
(21) Anmeldenummer: 04017049.0
(22) Anmeldetag: 20.07.2004
(51) Int. Cl.: G01V 8/10

(54) **Optischer Sensor**
Optical sensor
Capteur optique

(30) Priorität: 01.08.2003 DE 10335263
(43) Veröffentlichungstag der Anmeldung: 02.02.2005
(73) Patentinhaber: Leuze electronic GmbH + Co KG, 73277 Owen/Teck (DE)
(72) Erfinder: Huss, Jörg, 73230 Kirchheim unter Teck (DE)
(74) Vertreter: Ruckh, Rainer Gerhard

(56) Entgegenhaltungen:
- EP-A2- 0 867 732
- DE-A1- 19 644 565
- DE-U1- 20 005 283
- GB-A- 1 529 022
- US-A- 5 808 759

## Beschreibung

Die Erfindung betrifft einen optischen Sensor gemäß dem Oberbegriff des Anspruchs 1.

Derartige optische Sensoren können insbesondere als Lichtschranken, Lichttaster oder als Distanzsensoren ausgebildet sein. Generell weisen diese einen Sendelichtstrahlen emittierenden Sender und einen Empfangslichtstrahlen empfangenden Empfänger auf. Zudem ist eine Auswerteeinheit vorgesehen, in welcher aus den Empfangssignalen am Ausgang des Empfängers ein Objektfeststellungssignal generiert wird.

Dem Sender des optischen Sensors ist typischerweise eine Sendeoptik in Form einer Linse zur Strahlformung der Sendelichtstrahlen nachgeordnet. Die Strahlformung erfolgt derart, dass die Sendelichtstrahlen einen im Wesentlichen konstanten Strahlquerschnitt aufweisen, so dass mit den Sendelichtstrahlen eine punktuelle Abtastung von zu erfassenden Objekten ermöglicht wird.

In zahlreichen Applikationen weisen die zu detektierenden Objekte Strukturen wie zum Beispiel Ausnehmungen oder Löcher auf. Treffen die Sendelichtstrahlen auf derartige Objektstrukturen, so können Fehldetektionen auftreten, wenn von diesen Objektstrukturen nur ein geringer Teil der Sendelichtstrahlen als Empfangslichtstrahlen zum Empfänger zurückreflektiert wird.

Zur Detektion derartiger Objektstrukturen ist es daher wünschenswert, dass die Sendelichtstrahlen einen möglichst großen Strahlquerschnitt aufweisen, so dass der auf dem Objekt abgebildete Lichtfleck der Sendelichtstrahlen einen möglichst großen Ausschnitt der Objektoberfläche abdeckt. In diesem Fall wird ein hinreichend großer Anteil der Sendelichtstrahlen von dem Objekt als Empfangslichtstrahlen in Richtung des Empfängers auch dann reflektiert, wenn die Objektoberfläche Inhomogenitäten, insbesondere auch Löcher aufweist.

Um eine derartige Strahlaufweitung der Sendelichtstrahlen zu realisieren, kann die von einer Linse gebildete Sendeoptik durch Optikanordnungen aus Zylinderlinsen und dergleichen ersetzt werden. Typischerweise muss dem Empfänger eine entsprechende Optik mit ähnlicher Ausbildung vorgeordnet werden, damit ein hinreichender Teil der von einem Objekt zurückreflektierten Empfangslichtstrahlen über diese Optik auf den Empfänger geführt wird.

Nachteilig hierbei ist, dass derartige Optikanordnungen ein erhebliches Bauvolumen aufweisen, welches die Baugröße der optischen Sensoren in unerwünschter Weise vergrößert. Weiterhin ist nachteilig, dass derartige Optiken teuer sind und zudem einen erheblichen Montage- und Justieraufwand bedingen, wodurch die Herstellkosten des optischen Sensors erheblich verteuert werden.

Die DE 196 44 565 A1 betrifft eine Überwachungsschaltung mit mindestens zwei abwechselnd sendenden Strahlungsquellen, mit mindestens einem reflektierte Strahlung empfangenden Empfänger und mit einer Auswerteeinrichtung, welche die Differenz der empfangenen Signale misst. Weiterhin ist ein Koppelelement vorgesehen, welches die in den umgebenden Luftraum übertragene Strahlung der Strahlungsquellen und/oder von dem umgebenden Luftraum zum Empfänger übertragene Reflexionsstrahlung anpasst. Das Koppelelement kann eine Fresnel-Linse, ein optisches Gitter, eine holographische Folie oder eine optische Linse sein.

Der Erfindung liegt die Aufgabe zugrunde einen optischen Sensor der eingangs genannten Art bereitzustellen, der kostengünstig herstellbar ist und zugleich eine sichere Objektdetektion auch bei Inhomogenitäten der Objektoberfläche gewährleistet.

Zur Lösung dieser Aufgabe sind die Merkmale des Anspruchs 1 vorgesehen. Vorteilhafte Ausführungsformen und zweckmäßige Weiterbildungen der Erfindung sind in den Unteransprüchen beschrieben.

Der erfindungsgemäße optische Sensor dient zur Erfassung von Objekten in einem Überwachungsbereich und weist einen Sendelichtstrahlen emittierenden Sender, einen Empfangslichtstrahlen empfangenden Empfänger und eine Auswerteeinheit, in welcher die am Ausgang des Empfängers anstehenden Empfangssignale zur Generierung eines Objektfeststellungssignals ausgewertet werden, auf. Dem Sender ist eine Sendeoptik nachgeordnet und dem Empfänger eine Empfangsoptik vorgeordnet. Der optische Sensor ist in einem Gehäuse integriert und weist einen ortsauflösenden Empfänger auf. Die Sendelichtstrahlen und Empfangslichtstrahlen durchsetzen ein Austrittsfenster in der Frontwand des Gehäuses. Eine lichtstreuende Folie ist im Strahlengang der Sendelichtstrahlen zwischen der Sendeoptik und dem Austrittsfenster austauschbar angeordnet. Alternativ oder zusätzlich ist eine lichtstreuende Folie ist im Strahlengang der Empfangslichtstrahlen zwischen der Empfangsoptik und dem Austrittsfenster austauschbar angeordnet. Dadurch erfolgt eine Strahlaufweitung der Sendelichtstrahlen beziehungsweise der Empfangslichtstrahlen.

Mit den lichtstreuenden Folien können je nach Applikation des optischen Sensors die Sendelichtstrahlen und/oder Empfangslichtstrahlen in definierter Weise aufgeweitet werden.

Ein wesentlicher Vorteil hierbei besteht darin, dass die lichtstreuenden Folien einen äußerst geringen Platzbedarf beanspruchen und somit ohne Vergrößerung des Bauvolumens im optischen Sensor integriert werden können. Weiterhin ist vorteilhaft, dass die lichtstreuenden Folien im optischen Sensor ausgetauscht und insbesondere auch nachträglich im optischen Sensor integriert werden können. Durch eine geeignete Wahl der lichtstreuenden Folien kann somit die Strahlaufweitung der Sendelichtstrahlen und/oder der Empfangslichtstrahlen in einfacher Weise vorgegeben und an die jeweiligen applikationsspezifischen Anforderungen angepasst werden.

Die lichtstreuenden Folien können dabei derart ausgebildet sein, dass mit diesen eine isotrope oder auch eine anisotrope Strahlaufweitung der Sendelichtstrahlen beziehungsweise der Empfangslichtstrahlen realisiert werden kann. Die anisotrope Strahlaufweitung kann insbesondere in Form einer elliptischen Strahlaufweitung erfolgen. Somit kann durch eine geeignete Wahl der lichtstreuenden Folien die Strahlcharakteristik der Sendelichtstrahlen und Empfangslichtstrahlen variabel vorgegeben werden. Dabei wird mittels der lichtstreuenden Folie die Strahlaufweitung der Sendelichtstrahlen derart gewählt, dass ein hinreichend großer Sendefleck auf die jeweilige Objektoberfläche abgebildet wird. Weiterhin wird mittels der lichtstreuenden Folie die Strahlaufweitung der Empfangslichtstrahlen so gewählt, dass eine zur Objektdetektion ausreichende Empfangslichtmenge auf den Empfänger auftrifft.

Um eine Information über den Abstand eines Objektes zum optischen Sensor zu erhalten, ist der Empfänger von einem ortsauflösenden Empfänger gebildet. Insbesondere kann dabei der Empfänger eine Zeilenanordnung von Empfangselementen aufweisen. Der Auftreffpunkt des Empfangslichtflecks auf den ortsauflösenden Empfänger liefert dann ein Maß für die Objektdistanz.

Die Strahlaufweitung wird derart gewählt, dass die Distanzbestimmung mittels des ortsauflösenden Empfängers nicht beeinträchtigt wird. Für den Fall, dass der Empfänger aus einer zeilenformigen Anordnung von Empfangselementen besteht, wird dann mittels der lichtstreuenden Folie zweckmäßigerweise eine anisotrope Strahlaufweitung der Empfangslichtstrahlen quer zur Längsachse der zeilenförmigen Anordnung der Empfangselemente durchgeführt.

Generell kann der erfindungsgemäße optische Sensor von einer Lichtschranke, einem Lichttaster oder einem Distanzsensor gebildet sein.

Die Erfindung wird im Nachstehenden anhand der Zeichnungen erläutert. Es zeigen:
- Figur 1:: Schematische Darstellung eines als Lichttaster ausgebildeten optischen Sensors.
- Figur 2:: Schematische Darstellung der mittels einer lichtstreuenden Folie bewirkten Strahlaufweitung der Sendelichtstrahlen und Empfangslichtstrahlen des optischen Sensors gemäß Figur 1.
- Figur 3:: Abbildung der Sendelichtstrahlen auf die Oberfläche eines zu detektierenden Objektes.
- Figur 4:: Strahlführung der Sendelichtstrahlen und Empfangslichtstrahlen im optischen Sensor gemäß Figur 1.

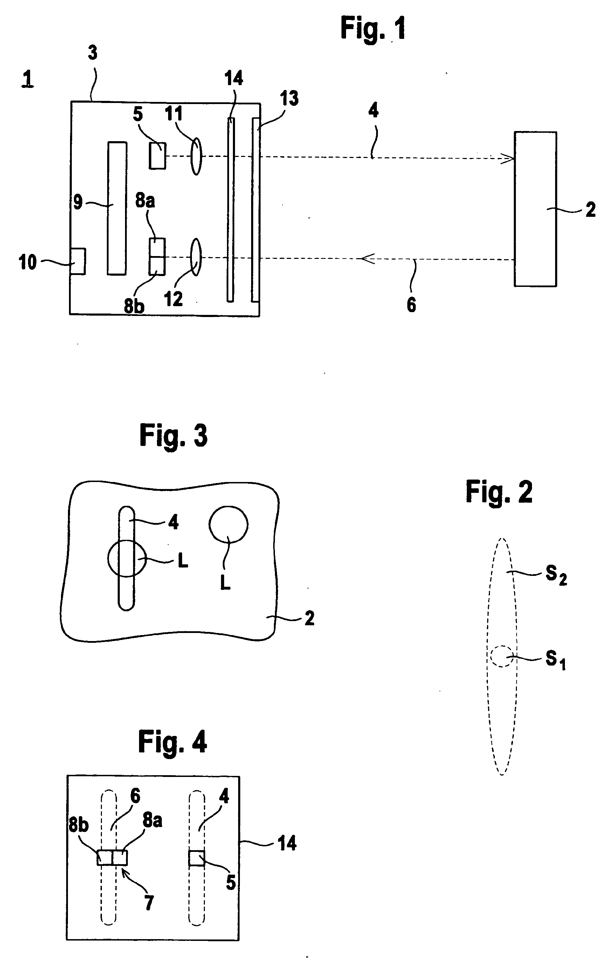

Figur 1 zeigt schematisch den Aufbau eines optischen Sensors 1 zur Detektion von Objekten 2 im Überwachungsbereich. Im vorliegenden Fall ist der optische Sensor 1 als Lichttaster ausgebildet. Prinzipiell kann der optische Sensor 1 auch als Lichtschranke, Distanzsensor und dergleichen ausgebildet sein.

Der optische Sensor 1 ist in einem Gehäuse 3 integriert. Der optische Sensor 1 weist einen Sendelichtstrahlen 4 emittierenden Sender 5 und einen Empfangslichtstrahlen 6 empfangenden Empfänger 7 auf. Der Sender 5 besteht aus einer Leuchtdiode. Der Empfänger 7 ist im vorliegenden Fall als ortsauflösender Empfänger 7 ausgebildet und weist zwei nebeneinander liegende Empfangselemente 8a, 8b auf, die jeweils aus einer Photodiode gebildet sind. Der Sender 5 liegt in Abstand zum Empfänger 7 in Verlängerung der Längsachse des Empfängers 7.

Für den Fall, dass der optische Sensor 1 als energetischer Lichttaster ausgebildet ist, kann der Empfänger 7 aus einer einzelnen Photodiode bestehen. Für den Fall, dass der optische Sensor 1 als Distanzsensor ausgebildet ist, kann der Empfänger 7 eine zeilenförmige Anordnung von Empfangselementen, insbesondere eine CCD-Zeile oder CMOS-Zeile aufweisen. Auch matrixförmige Anordnungen von Empfangselementen sind möglich.

Der Sender 5 und der Empfänger 7 sind an eine Auswerteeinheit 9 angeschlossen, die von einem Mikroprozessor oder dergleichen gebildet ist. Mittels der Auswerteeinheit 9 wird der Sender 5 angesteuert. Zudem erfolgt in der Auswerteeinheit 9 die Auswertung der am Ausgang des Empfängers 7 anstehenden Empfangssignale. Das daraus generierte Objektfeststellungssignal wird über einen Schaltausgang 10 ausgegeben.

Der optische Sensor 1 ist im vorliegenden Fall als Lichttaster mit einer sogenannten Hintergrundunterdrückung ausgebildet. In der Auswerteeinheit 9 wird das Verhältnis der auf die Empfangselemente 8a, 8b auftreffenden Empfangslichtmengen ausgewertet, in dem der Quotient oder die Differenz der Ausgangssignale der Empfangselemente 8a, 8b gebildet wird. Durch diese Signalauswertung wird eine Information über die Distanz des detektierten Objekts 2 zum optischen Sensor 1 gewonnen. Der Quotient oder die Differenz der Ausgangssignale wird dann mittels eines Schwellwerts bewertet. Das dadurch generierte Objektfeststellungssignal bildet ein binäres Schaltsignal, das über den Schaltausgang 10 ausgegeben wird. Das Schaltsignal nimmt einen ersten Schaltzustand "Objekt erkannt" ein, wenn das Objekt 2 innerhalb eines durch eine Tastweite begrenzten Distanzbereichs zum optischen Sensor 1 detektiert wurde, wobei die Tastweite durch die Höhe des Schwellwerts vorgegeben ist. Das Schaltsignal nimmt einen zweiten Schaltzustand "Überwachungsbereich frei" ein, wenn entweder ein Objekt 2 bei einer oberhalb der Tastweite liegenden Distanz detektiert wird oder falls kein Objekt 2 detektiert wird.

Für den Fall, dass der Lichttaster als energetischer Lichttaster oder als Lichtschranke ausgebildet ist und einen Empfänger 7 mit nur einem photoempfindlichen Empfangselement 8a aufweist, wird das Empfangssignal des Empfängers 7 zur Generierung eines binären Schaltsignals ebenfalls mittels eines Schwellwerts bewertet.

Wie aus Figur 1 ersichtlich ist dem Sender 5 eine Sendeoptik 11 zur Strahlformung der Sendelichtstrahlen 4 nachgeordnet. Die Sendeoptik 11 besteht aus einer Linse mit der Sendelichtstrahlen 4 zu einem Strahlbündel mit einem konstanten kreisförmigen Querschnitt geformt werden. Entsprechend ist dem Empfänger 7 eine Empfangsoptik 12 vorgeordnet, die zur Fokussierung der Empfangslichtstrahlen 6 auf den Empfänger 7 dient und ebenfalls von einer Linse gebildet ist. In der Frontwand des Gehäuses 3 ist ein Austrittsfenster 13 integriert, durch welches die Sendelichtstrahlen 4 und die Empfangslichtstrahlen 6 geführt sind.

Zwischen der Sendeoptik 11 und der Empfangsoptik 12 einerseits und dem Austrittsfenster 13 andererseits ist eine lichtstreuende Folie 14 angebracht. Die lichtstreuende Folie 14 ist an einer nicht dargestellten Aufnahme im Gehäuse 3 fixiert. Die Fläche der lichtstreuenden Folie 14 ist derart gewählt, dass die Sendelichtstrahlen 4 und die Empfangslichtstrahlen 6 vollständig über diese lichtstreuende Folie 14 geführt sind.

Mit der lichtstreuenden Folie 14 wird eine definierte Strahlaufweitung der Sendelichtstrahlen 4 und der Empfangslichtstrahlen 6 erzielt. Prinzipiell kann mit der lichtstreuenden Folie 14 eine isotrope Strahlaufweitung erzielt werden. In diesem Fall würde der kreisförmige Strahlquerschnitt der einfallenden Sendelichtstrahlen 4 derart aufgeweitet, dass die Sendelichtstrahlen 4 beim Austritt aus der lichtstreuenden Folie 14 einen vergrößerten kreisförmigen Strahlquerschnitt aufweisen.

Bei dem Ausführungsbeispiel des optischen Sensors 1 gemäß Figur 1 wird mit der lichtstreuenden Folie 14 eine anisotrope Strahlaufweitung bewirkt. Figur 2 zeigt schematisch die Strahlaufweitung der Sendelichtstrahlen 4 mittels der lichtstreuenden Folie 14. Die Strahlformung der Sendelichtstrahlen 4 mittels der Sendeoptik 11 erfolgt derart, dass diese einen kreisförmigen Strahlquerschnitt aufweisen, der in Figur 2 mit S₁ gekennzeichnet ist. Beim Durchgang durch die lichtstreuende Folie 14 werden die Sendelichtstrahlen 4 anisotrop aufgeweitet, so dass diese nach Austritt aus der lichtstreuenden Folie 14 einen elliptischen Strahlquerschnitt aufweisen, der in Figur 2 mit S₂ gekennzeichnet ist. Im vorliegenden Fall werden dabei die Sendelichtstrahlen 4 entlang der großen Hauptachse der Ellipse bei Durchgang durch die lichtstreuende Folie 14 um einen Winkel von etwa 60 ° aufgestreut, wogegen die Sendelichtstrahlen 4 in Richtung der kleinen Hauptachse der Ellipse nur um einem Winkel von etwa 0,2 ° aufgestreut werden. Die Aufstreuung der Empfangslichtstrahlen 6 erfolgt analog zur Aufstreuung der Sendelichtstrahlen 4.

Die lichtstreuende Folie 14 weist generell eine innere Struktur aus einer großen Anzahl von Mikrolinsenelementen auf. Die lichtstreuende Folie 14 kann dabei generell als Fresnel-Linsen-Folie oder als Lentikular-Folie ausgebildet sein.

Im vorliegenden Fall weist die lichtstreuende Folien 14 im Innern eine statistisch verteilte Struktur von Mikrolinsenelementen auf, wobei die Oberfläche eine holographische Struktur bildet. Eine derartige lichtstreuende Folie 14 wird beispielsweise unter dem Markennamen "Holographic Light Shaping Diffusers ®" vertrieben. Die Oberflächenstruktur dieser lichtstreuenden Folie 14 ist als Relieff-Hologrammstruktur ausgebildet. Im Innern der lichtstreuenden Folie 14 befindet sich eine nicht periodische Anordnung von Mikrolinsenelementen, welche eine wellenlängenunabhängige Lichtaufstreuung bewirken. Je nach Ausbildung der lichtstreuenden Folie 14 kann eine zirkulare oder elliptische Lichtaufstreuung erhalten werden, wobei entlang der ersten Hauptachse Streuwinkel im Bereich von 0,2 ° bis 35 ° und entlang der zweiten Hauptachse Streuwinkel im Bereich von 10 ° bis 95 ° erzielt werden können.

Figur 3 zeigt ein Anwendungsbeispiel einer Objektdetektion mittels des optischen Sensors 1 gemäß Figur 1. Das zu detektierende Objekt 2 weist mehrere Löcher auf, die in Figur 3 mit L gekennzeichnet sind. Die Durchmesser der Löcher sind größer als der Strahlquerschnitt S₁ der mit der Sendeoptik 11 geformten Sendelichtstrahlen 4. Ohne die lichtstreuende Folie 14 im optischen Sensor 1 wäre die Objektdetektion daher abhängig vom Auftreffpunkt der Sendelichtstrahlen 4 auf der Objektoberfläche.

Für den Fall, dass sich das Objekt 2 in einem Abstand zum optischen Sensor 1 befindet, der kleiner als die Tastweite des optischen Sensors 1 ist, wird der

Schaltzustand "Objekt erkannt" für das Schaltsignal erhalten, falls die Sendelichtstrahlen 4 auf die Objektoberfläche auftreffen und von dort zum Empfänger 7 als Empfangslichtstrahlen 6 zurückreflektiert werden. Für den Fall, dass die Sendelichtstrahlen 4 auf ein Loch im Objekt 2 treffen, durchsetzen die Sendelichtstrahlen 4 dieses Loch und werden demzufolge nicht mehr auf den Empfänger 7 reflektiert. Das Schaltsignal nimmt dann den Schaltzustand "Überwachungsbereich frei" ein, obwohl sich das Objekt 2 innerhalb des von der Tastweite begrenzten Tastbereichs befindet.

Mit der lichtstreuenden Folie 14 können derartige Fehldetektionen des optischen Sensors 1 ausgeschlossen werden wie in den Figuren 3 und 4 veranschaulicht ist. Durch die lichtstreuende Folie 14 werden die Sendelichtstrahlen 4 von dem Strahlquerschnitt S₁ auf den elliptischen Strahlquerschnitt S₂ aufgeweitet. Sind die Sendelichtstrahlen 4 auf ein Loch des Objekts 2 wie in Figur 3 veranschaulicht ausgerichtet, so wird durch den elliptischen Strahlquerschnitt der mit der lichtstreuenden Folie 14 aufgeweiteten Sendelichtstrahlen 4 erreicht, dass Teile des Lichtflecks der Sendelichtstrahlen 4 auf den das Loch begrenzenden Randbereich des Objekts 2 abgebildet werden. Dieser Teil der Sendelichtstrahlen 4 wird als Empfangslicht in Richtung des Empfängers 7 zurückreflektiert.

Da nur die Randbereiche der Sendelichtstrahlen 4 in Richtung des Empfängers 7 zurückreflektiert werden, würden diese ohne die lichtstreuende Folie 14 nicht auf den Empfänger 7 treffen. Zwar würden die Empfangslichtstrahlen 6 mit der Empfangsoptik 12 gebündelt. Da die Empfangslichtstrahlen 6 jedoch nur auf die Randbereiche der Empfangsoptik 12 treffen würden, würde keine zur Objektdetektion ausreichende Lichtmenge auf den Empfänger 7 reflektiert. Da die lichtstreuende Folie 14 jedoch der Empfangsoptik 12 vorgeordnet ist, erfolgt mit dieser eine elliptische Strahlaufweitung der Empfangslichtstrahlen 6 bevor diese auf den Empfänger 7 auftreffen. Dadurch ist gewährleistet, dass eine für die Objektdetektion hinreichende Empfangslichtmenge auf den Empfänger 7 trifft.

Figur 4 zeigt die Richtung der Strahlaufweitung der Sendelichtstrahlen 4 und der Empfangslichtstrahlen 6 relativ zur Anordnung des Senders 5 und des Empfängers 7. Wie aus Figur 4 ersichtlich verlaufen die Empfangselemente 8a, 8b des Empfängers 7 sowie der Sender 5 längs einer Geraden in horizontaler Richtung. Die Strahlaufweitung der Sendelichtstrahlen 4 und der Empfangslichtstrahlen 6 erfolgt dagegen senkrecht hierzu in vertikaler Richtung. Somit wird die Breite des Empfangslichtflecks auf dem Empfänger 7 nicht vergrößert.

Dies ist eine notwendige Voraussetzung dafür, dass aus dem Verhältnis der Ausgangssignale der Empfangselemente 8a, 8b eine Information über die Objektdistanz gewonnen werden kann.

### Bezugszeichenliste

- (1): optischer Sensor
- (2): Objekt
- (3): Gehäuse
- (4): Sendelichtstrahlen
- (5): Sender
- (6): Empfangslichtstrahlen
- (7): Empfänger
- (8a): Empfangselement
- (8b): Empfangselement
- (9): Auswerteeinheit
- (10): Schaltausgang
- (11): Sendeoptik
- (12): Empfangsoptik
- (13): Austrittsfenster
- (14): lichtstreuende Folie

- L: Löcher
- S₁: kreisförmiger Strahlquerschnitt
- S₂: elliptischer Strahlquerschnitt

## Patentansprüche

1. Optischer Sensor (1) zur Erfassung von Objekten in einem Überwachungsbereich mit einem Sendelichtstrahlen (4) emittierenden Sender (5), einem Empfangslichtstrahlen (6) empfangenden Empfänger (7) und einer Auswerteeinheit (9), in welcher die am Ausgang des Empfängers (7) anstehenden Empfangssignale zur Generierung eines Objektfeststellungssignals ausgewertet werden, wobei dem Sender (5) eine Sendeoptik (11) nachgeordnet ist und dem Empfänger (7) eine Empfangsoptik (12) vorgeordnet ist, und wobei der optische Sensor (1) in einem Gehäuse (3) integriert ist, wobei die Sendelichtstrahlen (4) und die Empfangslichtstrahlen (6) ein Austrittsfenster (13) in der Frontwand des Gehäuses (3) durchsetzen, **dadurch gekennzeichnet, dass** eine lichtstreuende Folie (14) im Strahlengang der Sendelichtstrahlen (4) zwischen der Sendeoptik (11) und dem Austrittsfenster (13) austauschbar angeordnet ist und/oder dass eine lichtstreuende Folie (14) im Strahlengang der Empfangslichtstrahlen (6) zwischen der Empfangsoptik (12) und dem Austrittsfenster (13) austauschbar angeordnet, ist wodurch eine Strahlaufweitung der Sendelichtstrahlen (4) beziehungsweise der Empfangslichtstrahlen (6) erfolgt.

2. Optischer Sensor nach Anspruch 1, **dadurch gekennzeichnet, dass** die lichtstreuende Folie (14) eine statistische Verteilung von Mikrolinsenelementen aufweist.

3. Optischer Sensor nach Anspruch 2, **dadurch gekennzeichnet, dass** die lichtstreuende Folie (14) eine holographische Oberflächenstruktur aufweist.

4. Optischer Sensor nach Anspruch 2, **dadurch gekennzeichnet, dass** die lichtstreuende Folie (14) als Fresnel-Linsen-Folie ausgebildet ist.

5. Optischer Sensor nach Anspruch 2, **dadurch gekennzeichnet, dass** die lichtstreuende Folie (14) als Lentikular-Folie ausgebildet ist.

6. Optischer Sensor nach einem der Ansprüche 1 bis 5, **dadurch gekennzeichnet, dass** mit der lichtstreuenden Folie (14) eine isotrope Strahlaufweitung bewirkt wird.

7. Optischer Sensor nach einem der Ansprüche 1 bis 5, **dadurch gekennzeichnet, dass** mit der lichtstreuenden Folie (14) eine anisotrope Strahlaufweitung bewirkt wird.

8. Optischer Sensor nach Anspruch 7, **dadurch gekennzeichnet, dass** mit der lichtstreuenden Folie (14) eine elliptische Strahlaufweitung bewirkt wird.

9. Optischer Sensor nach einem der Ansprüche 1 bis 8, **dadurch gekennzeichnet, dass** dieser als energetischer Lichttaster oder als Lichtschranke ausgebildet ist.

10. Optischer Sensor nach Anspruch 9, **dadurch gekennzeichnet, dass** der Empfänger (7) von einer Photodiode gebildet ist.

11. Optischer Sensor nach einem der Ansprüche 1 bis 8, **dadurch gekennzeichnet, dass** dieser einen ortsauflösenden Empfänger (7) aufweist.

12. Optischer Sensor nach Anspruch 11, **dadurch gekennzeichnet, dass** der Empfänger (7) zwei nebeneinander liegende Empfangselemente (8a, 8b) aufweist.

13. Optischer Sensor nach Anspruch 12, **dadurch gekennzeichnet, dass** dieser als Lichttaster mit einer Hintergrundunterdrückung ausgebildet ist.

14. Optischer Sensor nach Anspruch 11, **dadurch gekennzeichnet, dass** der Empfänger (7) eine Zeilen- oder Matrixanordnung von Empfangselementen (8a, 8b) aufweist.

15. Optischer Sensor nach Anspruch 14, **dadurch gekennzeichnet, dass** dieser als Distanzsensor ausgebildet ist.

## Claims

1. Optical sensor (1) for detecting objects in a monitoring region, comprising a transmitter (5) emitting transmitted light beams (4), a receiver (7) receiving received light beams (6) and an evaluating unit (9) in which the received signals present at the output of the receiver (7) are evaluated for generation of an object detection signal, wherein a transmitting optical system (11) is arranged downstream of the transmitter (5) and a receiving optical system (11) is arranged upstream of the receiver (7), wherein the optical sensor (1) is integrated in a housing (3) and wherein the transmitted light beams (4) and the received light beams (6) pass through an outlet window (13) in the front wall of the housing (3), **characterised in that** a light-dispersing film (14) is exchangeably arranged in the beam path of the transmitted light beams (4) between the transmitting optical system (11) and the outlet window (13) and/or that a light-dispersing film (14) is exchangeably arranged in the beam path of the received light beams (6) between the receiving optical system (12) and the outlet window (13), whereby a beam widening of the transmitted light beams (4) or of the received light beams (6) takes place.

2. Optical sensor according to claim 1, **characterised in that** the light-dispersing film (14) comprises a statistical distribution of microlens elements.

3. Optical sensor according to claim 2, **characterised in that** the light-dispersing film (14) has a holographic surface structure.

4. Optical sensor according to claim 2, **characterised in that** the light-dispersing film (14) is constructed as a Fresnel lens film.

5. Optical sensor according to claim 2, **characterised in that** the light-dispersing film (14) is constructed as a lenticular film.

6. Optical sensor according to any one of claims 1 to 5, **characterised in that** an isotropic beam widening is produced by the light-dispersing film (14).

7. Optical sensor according to any one of claims 1 to 5, **characterised in that** an anisotropic beam widening is produced by the light-dispersing film (14).

8. Optical sensor according to claim 7, **characterised in that** an elliptical beam widening is produced by the light-dispersing film (14).

9. Optical sensor according to any one of claims 1 to 8, **characterised in that** this is constructed as an energetic light scanner or as a light barrier.

10. Optical sensor according to claim 9, **characterised in that** the receiver (7) is formed by a photodiode.

11. Optical sensor according to any one of claims 1 to 8, **characterised in that** this comprises a position-resolving receiver (7).

12. Optical sensor according to claim 11, **characterised in that** the receiver (7) comprises two receiving elements (8a, 8b) lying adjacent to one another.

13. Optical sensor according to claim 12, **characterised in that** this is formed as a light scanner with background suppression.

14. Optical sensor according to claim 11, **characterised in that** the receiver (7) has a lineal or matrix arrangement of receiving elements (8a, 8b).

15. Optical sensor according to claim 14, **characterised in that** this is constructed as a distance sensor.

## Revendications

1. Capteur optique (1) pour la détection d'objets dans une zone de surveillance, avec un émetteur (5) émettant des rayons lumineux d'émission (4), un récepteur (7) recevant des rayons lumineux de réception (6) et une unité d'évaluation (9) dans laquelle les signaux de réception présents à la sortie du récepteur (7) sont évalués pour générer un signal de détection d'objet, dans lequel une optique d'émission (11) est placée après l'émetteur (5) et une optique de réception (12) est placée avant le récepteur (7), et lequel capteur optique (1) est intégré dans un boîtier (3), les rayons lumineux d'émission (4) et les rayons lumineux de réception (6) traversant une fenêtre de sortie (13) dans la paroi avant du boîtier (3), **caractérisé en ce qu'**une feuille de diffusion de lumière (14) est disposée de manière échangeable dans le chemin optique des rayons lumineux d'émission (4) entre l'optique d'émission (11) et la fenêtre de sortie (13) et/ou qu'une feuille de diffusion de lumière (14) est disposée de manière échangeable dans le chemin optique des rayons lumineux de réception (6) entre l'optique de réception (12) et la fenêtre de sortie (13), de sorte qu'il se produit un élargissement de faisceau des rayons lumineux d'émission (4) et/ou des rayons lumineux de réception (6).

2. Capteur optique selon la revendication 1, **caractérisé en ce que** la feuille de diffusion de lumière (14) présente une répartition statistique d'éléments à microlentille.

3. Capteur optique selon la revendication 2, **caractérisé en ce que** la feuille de diffusion de lumière (14) présente une structure superficielle holographique.

4. Capteur optique selon la revendication 2, **caractérisé en ce que** la feuille de diffusion de lumière (14) est réalisée sous la forme d'une feuille de lentilles de Fresnel.

5. Capteur optique selon la revendication 2, **caractérisé en ce que** la feuille de diffusion de lumière (14) est réalisée sous la forme d'une feuille lenticulaire.

6. Capteur optique selon une des revendications 1 à 5, **caractérisé en ce que** la feuille de diffusion de lumière (14) produit un élargissement de faisceau isotrope.

7. Capteur optique selon une des revendications 1 à 5, **caractérisé en ce que** la feuille de diffusion de lumière (14) produit un élargissement de faisceau anisotrope.

8. Capteur optique selon la revendication 7, **caractérisé en ce que** la feuille de diffusion de lumière (14) produit un élargissement de faisceau elliptique.

9. Capteur optique selon une des revendications 1 à 8, **caractérisé en ce que** celui-ci est réalisé sous la forme d'un détecteur de lumière énergétique ou d'une barrière photoélectrique.

10. Capteur optique selon la revendication 9, **caractérisé en ce que** le récepteur (7) est formé par une photodiode.

11. Capteur optique selon une des revendications 1 à 8, **caractérisé en ce que** celui-ci présente un récepteur (7) à résolution spatiale.

12. Capteur optique selon la revendication 11, **caractérisé en ce que** le récepteur (7) présente deux éléments de réception (8a, 8b) juxtaposés.

13. Capteur optique selon la revendication 12, **caractérisé en ce que** celui-ci est réalisé sous la forme d'un détecteur de lumière avec élimination de l'arrière-plan.

14. Capteur optique selon la revendication 11, **caractérisé en ce que** le récepteur (7) présente un agencement linéaire ou matriciel d'éléments de réception (8a, 8b).

15. Capteur optique selon la revendication 14, **caractérisé en ce que** celui-ci est réalisé sous la forme d'un capteur de distance.
